# EUROPEAN PATENT SPECIFICATION

(11) **EP 1 164 646 B1**
(45) Date of publication and mention of the grant of the patent: **23.07.2008**
(21) Application number: 01113381.6
(22) Date of filing: 01.06.2001
(51) Int. Cl.: H01M 2/10

(54) **Insulating covering for accumulators**
Isolierdecke für Akkumulatoren
Couverture isolante pour accumulateurs

(30) Priority: 16.06.2000 IT MI200369
(43) Date of publication of application: 19.12.2001
(73) Proprietor: Fabbrica Italiana Accumulatori Motocarri Montecchio - F.I.A.M.M. S.p.A., 36075 Montecchio Maggiore (Vicenza) (IT)
(72) Inventor: Morrone, Luciano, Montecchio Maggiore (Vicenza) (IT)
(74) Representative: Lecce, Giovanni

(56) References cited:
- EP-A- 0 704 919
- DE-A- 19 752 755
- GB-A- 2 121 159

## Description

The present invention relates to an insulating covering for accumulators.

More particularly, the present invention relates to an insulating covering especially suitable for applications in starter batteries in internal-combustion engine motor-vehicles, to insulate them against heat.

As is known, accumulators installed in vehicles and called starter batteries are located in a special housing of the engine compartment. The temperature in the engine compartment may reach very high values during the use of the vehicle and heat is unavoidably transmitted to the accumulator. As a consequence, accumulators are submitted to high thermal stresses and their duration in the time reduces markedly.

Heat diffuses either by radiance or by convection, for instance through the air flows developed by the electric fan that cools the engine. Besides, the accumulator may be heated also by conduction if it gets in touch with other bodies.

The values that are considered to be optimal to preserve the integrity and efficiency of the accumulator in the time are comprised between 20 and 50°C, but in the practice these values are largely and systematically exceeded.

In order to obviate such drawback, insulating protections have been devised, the so-called suits, suitable to cover the body of the accumulator along the lateral zones. These suits are generally constituted of a coating from polyurethane foam, with a possible external containment cover from nonwoven fabric or formed by a sheet from plastic material. In order to ensure a satisfactory heat-insulation, all these suits must have a marked thickness or be obtained from high-density material, which involves a not negligible overall weight.

DE 19 752 755 discloses a covering without IR absorbing layer. GB 2 121 159 discloses the use of an IR absorbing layer inside a high-temperature battery.

Taking into account the fact that the spaces housing the accumulator are reduced and that in motor-vehicles the tendency to contain, if not to reduce, the weight is increasingly critical, it is clear that the suits of the above type are not the optimal solution of the problem. In any case, said suits do not allow to obtain a temperature cutting according to the aforesaid optimal values, such as to ensure a long duration of the accumulator. The temperature of the accumulator, even though with the use of the suits, remains much higher than 20-50°C during the use of the vehicle, especially in critical climate conditions.

Object of the present invention is to obviate the aforesaid drawback.

More particularly, object of the invention is to provide an insulating covering for accumulators suitable to keep, during the use of the vehicle, a stable optimal temperature of the accumulator, even in critical climate conditions.

A further object of the present invention is to provide an insulating covering having a limited weight and thickness.

A further object of the present invention is to provide an insulating covering or suits for accumulators, that can be quickly and easily applied to protect at least the lateral bands of the accumulator.

A further object of the present invention is to provide an insulating covering or suits that can ensure a high level of resistance and thermal insulation, and also such as to be easily and economically realized.

According to the present invention, these and still other objects that will be clear thank to the following description, are achieved by an insulating covering especially suitable for starter batteries installed in internal-combustion engine motor-vehicles, constituted of a shaped and pre-molded panel comprising at least a layer or foil protecting from infrared radiation, coupled to at least another layer of material suitable to protect the accumulator from convection-transmitted heat.

The constructive and functional characteristics of the insulating covering for accumulators of the present invention will be better understood thanks to the following description, wherein reference is made to the attached drawings that represent a preferred, non limiting embodiment, and wherein:
Figure 1 is a plan schematic view of the development of the insulating covering for accumulators of the present invention;
Figure 2 is a top schematic view of the insulating covering of Figure 1, bent on itself so as to strike the lateral surface of an accumulator;
Figure 3 is the schematic view of a section of the insulating covering of Figure 2, obtained with a plan passing along the line A-A;

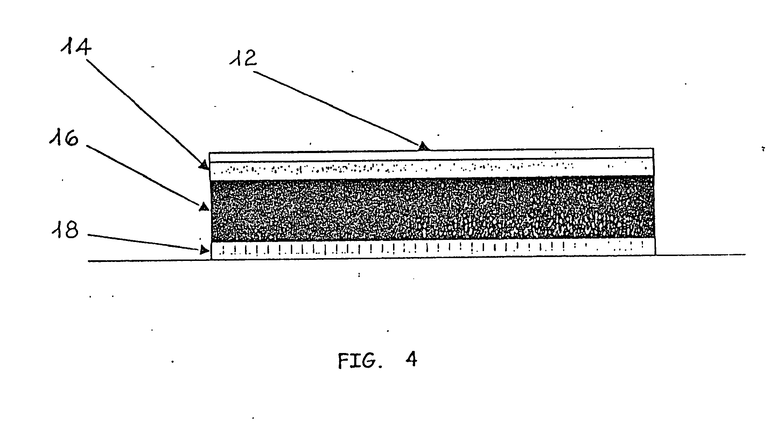

Figure 4 is the schematic view of a partial section of Figure 1, stressing the different layers that make it up; and
Figure 5 shows the temperature-time curves of thermal tests carried out on an accumulator with or without the insulating covering of the present invention.

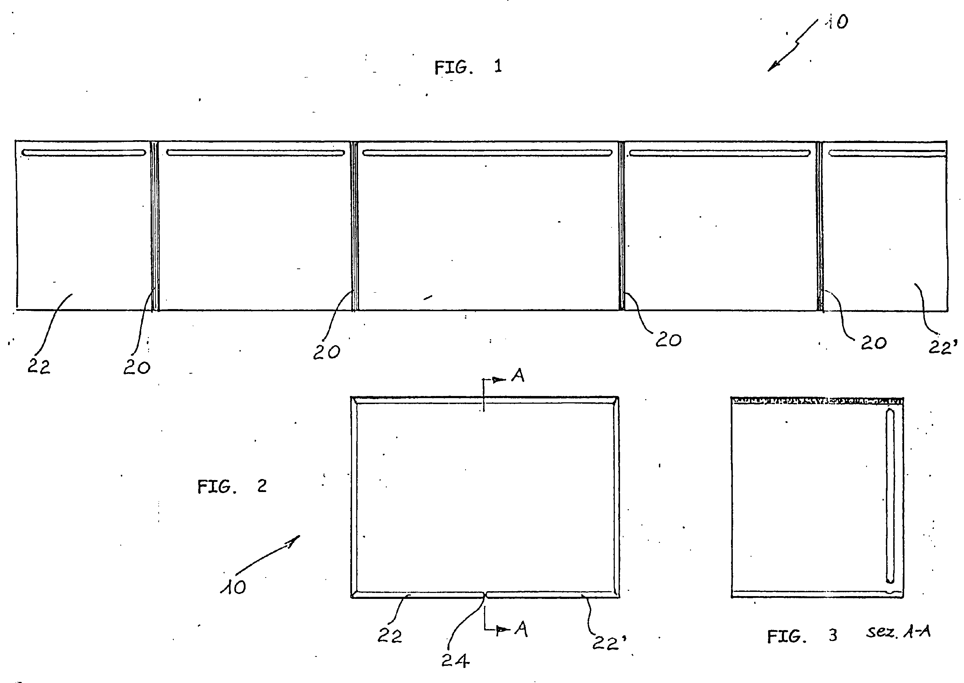

With reference to the aforesaid figures, the insulating covering for accumulators of the present invention, indicated by 10 as a whole in Figures 1 and 2, is basically constituted of a shaped panel having a limited thickness, comprised for instance between 5 and 20 mm, obtained by superposition and mutual tie during the molding step of a plurality of laminar materials different from each other. The coupling of said laminar materials forms a multi-layer sheet or foil, wherefrom the individual coverings or shaped covering panels 10 whose length and height depending on the type of accumulator to be insulated are obtained. As mentioned above, the protection of the accumulators is mainly referred to the heat developed in the engine compartment during the use of motor-cars, and is therefore associated to heat-insulation.

In its preferred embodiment, covering 10 of the present invention comprises four layers of different materials having various thickness, suitable to realize a global protection against heat transmitted either by radiance or by convection.

Starting from the external front, i.e. from the side intended for not being in touch with the surface of the accumulator, said covering 10 comprises a first layer or film 12 of low thickness, formed by a protective substance, transparent to infrared radiation, having dielectric properties, i.e. suitable to prevent the circulation of current. Said protective substance may be a lacquer, a paint or like material.

Said first layer 12, whose thickness is comprised, by way of orientation, between 50 and 200 µm, may be sprayed or applied with other suitable means on the surface of a foil or second layer 14 of a material protecting from infrared radiation. Said second layer 14, whose thickness is comprised, by way of orientation, between 2 and 50 µm, is preferably constituted of a sheet from aluminum, paper or aluminum-covered plastic material, such as polyethylene or nylon, or other metal foils suitable to reflect infrared radiation.

A third layer 16 is applied and fixed to the internal front of the foil or second layer 14, i.e. the front that is not covered by the protective substance. Said third layer 16 is constituted by expanded plastic material suitable to protect the accumulator from convection-transmitted heat. The thickness of the third layer 16 is preferably comprised between 1 and 10 mm. Besides protecting from convection-transmitted heat, said third layer 16 is resistant against the aggression of acids or acid fumes possibly dispersed by the accumulator, and against water, oils and substances present in the engine compartment or coming from parts thereof. Preferably, the third layer 16 is made from expanded, non-crosslinked polypropylene, having a density of about 40 kg/m³; however also the use of other materials, such as, for instance, expanded polystyrene, polyurethane foams, etc., cannot be excluded.

To said third layer 16 a fourth layer 18 is coupled and fixed, which layer is intended for striking the lateral surface of the accumulator body, once it has been mounted. Said fourth layer 18 forms a barrier against conduction-transmitted heat. It defines an air space constructed on polypropylene, polystyrene, polyurethane or a grid or frame from plastic material or nonwoven fabric from natural or synthetic fibers. The thickness of said fourth layer 18 is preferably comprised between 0.5 and 10 mm.

Covering 10, in the embodiment reported by way of example, schematically shown in Figures 1 and 2, is provided with lowerings or pre-impressions 20 that develop vertically along the whole height, to form folding lines that allow the easy bending of said covering along the lateral surface of the accumulator.

In order to prevent the jointing of the limbs of covering 10 from being difficult, both end faces of said covering 10 are advantageously subdivided vertically into two equal half-parts, indicated by 22 and 22'. In this manner, as shown in Figure 2, the jointing line 24 is in a favorable position for the final tie of covering 10 with the lateral surface of the accumulator. The union of the limbs or half-parts 22, 22' is obtained by means of adhesives or any other suitable means.

Preferably, covering 10 is employed to cover only the lateral surface of the accumulator and has a height such as to be contained between the edge of the upper lid and the lower shoe.

The overall thickness of covering 10 of the present invention is such as not to protrude with respect to said upper edge and lower shoe of the accumulator, remaining adherent to the surface of the accumulator, once it is applied, and preventing therefore the creation of clutters that might complicate the installation in the seat of the engine compartment. Generally, the overall thickness of covering 10 is not higher than 20 mm and is preferably comprised between 5 and 10 mm.

The covering of the present invention allows to insulate accumulators in a global manner, preventing, especially with a long use of the vehicles, their heating due to phenomena of radiance, convection and conduction. Tests carried out by the applicant have proved that the covering of the present invention allows to maintain the temperature of the accumulator lower by at least 10°C with respect to that of the engine compartment. This result is obtained with a very limited thickness of the covering. For instance, a thermal cutting of about 12°C is obtained with the covering of the present invention having a thickness of 7 mm.

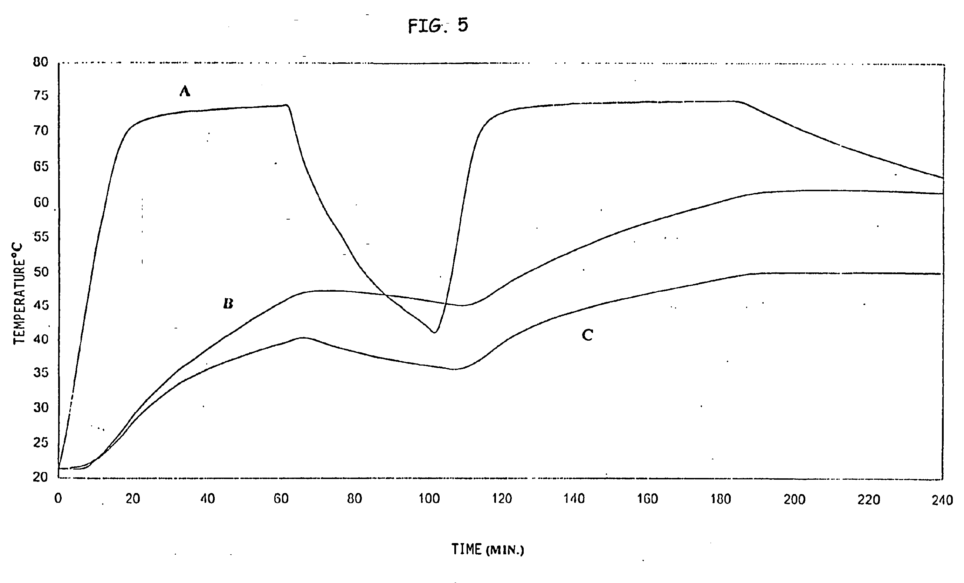

Figure 5 shows respectively the temperature-time curves of the heating oven (curve A) of an accumulator devoid of insulating covering (curve B) and of the same accumulator covered with the insulating covering of the present invention (curve C), immersed in said oven.

Particularly advantageous is the possibility of substantially limiting the overall thickness of the covering, thanks to the utilization of a multi-layer composite of the present invention.

Such a thermal cut involves, as is known, a remarkable increase in the average life of a battery. In fact, a 12°C cut typically involves a doubling of the average life of a battery.

While the present invention has been described above with reference to a possible embodiment thereof, reported by way of non-limiting example, it is evident that many modifications and variant will be clear to those skilled in the art, in the light of the above description.

For instance, the covering (10) may be constituted of a lower number of layers, comprising, for instance, only the anti-radiation foil (14) coupled to anti-convection layer (16). Besides, the covering (10) of the present invention can be used on accumulators of any kind, included those installed on electric traction means.

Therefore, the present invention intends to cover all the variants and modifications falling within the scope of the following claims.

## Claims

1. An insulating covering (10) for accumulators especially suitable for applications in starter batteries in internal-combustion engine motor-vehicles, constituted of an insulating panel from heat-insulating material, **characterized in that** said panel comprises at least a layer or foil (14) from a material protecting against infrared radiation, and at least a layer (16), coupled to and integral with said foil (14), constituted of a material protecting against convection-transmitted heat.

2. The insulating covering according to claim 1, **characterized in that** on the free surface of said layer or foil (14) from a material protecting against infrared radiation, a film (12) is applied constituted of a protective substance, transparent to infrared radiation and having dielectric properties.

3. The insulating covering according to claim 1 or 2, **characterized in that** on the free surface of layer 16, constituted of a material protecting against convection-transmitted heat a layer 18 is coupled and integral, constituted by a material protecting from conduction-transmitted heat.

4. The insulating covering according to any of the preceding claims, **characterized in that** it comprises: a first layer (12) formed by a substance transparent to infrared radiation and having dieletric properties; a second layer (14) constituted of a material protecting against infrared radiation; a third layer (16) constituted of a material protecting against convection-transmitted heat, and a fourth layer (18) constituted of a material protecting against conduction-transmitted heat.

5. The insulating covering according to any of the preceding claims, **characterized in that** layer (14) constituted of a material protecting against infrared radiation is a foil from aluminum or paper or aluminum-covered plastic material, having a thickness comprised between 2 and 50 µm.

6. The insulating covering according to any of the preceding claims, **characterized in that** layer (16) constituted of a material protecting against convection-transmitted heat is made up by a expanded plastic material, having a thickness comprised between 1 and 10 µm.

7. The insulating covering according to claim 6, wherein the expanded plastic material is expanded, non-crosslinked polypropylene, having a density of about 40 km/m³.

8. The insulating covering according to any of the preceding claims 3-7, **characterized in that** layer (18) constituted of a material protecting against conduction-transmitted heat constitutes an air space constructed on polypropylene, polystyrene, polyurethane or a grid or frame from plastic material or nonwoven fabric from natural and/or synthetic fibers and has a thickness comprised between 0.5 and 10 mm.

9. The insulating covering according to any of the preceding claims, **characterized in that** the multi-layer panel has an overall thickness that does not exceed 20 mm, and is preferably comprised between 5 and 10 mm.

10. The insulating covering according to any of the preceding claims, **characterized in that** the panel has a height equal to the portion between the edge of the upper lid and the lower shoe of the accumulator, and a length equal to the development of the lateral surface of said accumulator, and is provided with vertically developing lowerings or pre-impressions (20) forming bend lines.

## Patentansprüche

1. Isolationsabdeckung (10) für Akkumulatoren, insbesondere geeignet für Anwendungen in Starterbatterien in Kraftfahrzeugen mit Verbrennungsmotor, gebildet aus einer Isolierplatte aus wärmeisolierendem Material, **dadurch gekennzeichnet, dass** die Platte zumindest eine Schicht oder Folie (14) aus einem Material, welches gegen Infrarotstrahlung schützt, und zumindest eine Schicht (16) umfasst, die an die Folie (14) gekoppelt und mit dieser integriert ist, und aus einem Material gebildet ist, das gegen konvektionsübertragene Wärme schützt.

2. Isolationsabdeckung gemäß Anspruch 1, **dadurch gekennzeichnet, dass** auf die freie Oberfläche der Schicht oder Folie (14) aus einem Material, welches gegen Infrarotstrahlung schützt, ein Film (12) aufgebracht ist, der aus einer Schutzsubstanz gebildet wird, für Infrarotstrahlung transparent ist und dielektrische Eigenschaften aufweist.

3. Isolationsabdeckung gemäß Anspruch 1 oder 2, **dadurch gekennzeichnet, dass** an die freie Oberfläche der Schicht (16), die aus einem Material gebildet ist, welche gegen konvektionsübertragene Wärme schützt, eine Schicht (18) gekoppelt ist und integriert ist, die durch ein Material gebildet ist, welches gegen leitungsübertragene Wärme schützt.

4. Isolationsabdeckung gemäß irgendeinem der vorhergehenden Ansprüche, **dadurch gekennzeichnet, dass** diese umfasst: eine erste Schicht (12), die durch eine Substanz ausgebildet ist, die für Infrarotstrahlung transparent ist und dielektrische Eigenschaften aufweist; eine zweite Schicht (14), die aus einem Material gebildet ist, welches gegen Infrarotstrahlung schützt; eine dritte Schicht (16), die aus einem Material gebildet ist, welches gegen konvektionsübertragene Wärme schützt, und eine vierte Lage (18), die aus einem Material gebildet ist, welches gegen leitungsübertragene Wärme schützt.

5. Isolationsabdeckung gemäß irgendeinem der vorhergehenden Ansprüche, **dadurch gekennzeichnet, dass** die Schicht (14), die aus einem Material gebildet ist, welches gegenüber Infrarotstrahlung schützt, eine Folie aus Aluminium oder Papier, oder aluminiumbeschichteten Kunststoffmaterial mit einer Dicke ist, die zwischen 2 und 50 µm umfasst ist.

6. Isolationsabdeckung gemäß irgendeinem der vorhergehenden Ansprüche, **dadurch gekennzeichnet, dass** die Schicht (16), die aus einem Material gebildet ist, welches gegen konvektionsübertragene Wärme schützt, durch ein expandiertes Kunststoffmaterial mit einer Dicke, die zwischen 1 und 10 µm umfasst ist, gebildet ist.

7. Isolationsabdeckung gemäß Anspruch 6, wobei das expandierte Kunststoffmaterial expandiertes, nicht-querverbundenes Polypropylen ist, und eine Dichte von etwa 40 km/m³ aufweist.

8. Isolationsabdeckung gemäß irgendeinem der vorhergehenden Ansprüche 3 bis 7, **dadurch gekennzeichnet, dass** die Schicht (18), die aus einem Material gebildet ist, welches gegen leitungsübertragene Wärme schützt, einen Luftraum bildet, der auf Polypropylen, Polystyren, Polyurethan oder ein Gitter oder einen Rahmen aus Kunststoffmaterial oder nicht gewebtem Textil aus natürlichen und/oder synthetischen Fasern konstruiert ist und eine Dicke aufweist, die zwischen 0,5 und 10 mm umfasst ist.

9. Isolationsabdeckung gemäß irgendeinem der vorhergehenden Ansprüche, **dadurch gekennzeichnet, dass** die Mehrschichtplatte eine Gesamtdicke aufweist, die 20 mm nicht überschreitet, und vorzugsweise zwischen 5 und 10 mm umfasst ist.

10. Isolationsabdeckung gemäß irgendeinem der vorhergehenden Ansprüche, **dadurch gekennzeichnet, dass** die Platte eine Höhe gleich dem Abschnitt zwischen der Kante des oberen Deckels und des unteren Schuhs des Akkumulators ist, und eine Länge gleich der Entwicklung der seitlichen Oberfläche des Akkumulators ist, und mit sich vertikal entwickelnden Vertiefungen oder Vor-Abdrücken 20 versehen ist, welche Biegungslinien ausbilden.

## Revendications

1. Couverture isolante (10) pour accumulateurs spécialement adaptée à des applications dans des batteries de démarreurs de véhicules à moteur à combustion interne, constituée d'un panneau isolant en matière thermiquement isolante, **caractérisée en ce que** ledit panneau comprend au moins une couche ou feuille (14) de matière de protection contre les rayonnements infrarouges, et au moins une couche (16), couplée et d'un seul tenant avec ladite feuille (14), constituée d'une matière de protection contre la chaleur transmise par convexion.

2. Couverture isolante selon la revendication 1, **caractérisée en ce qu'**un film (12), constitué d'une substance protectrice, transparente aux rayonnements infrarouges et possédant des propriétés diélectriques, est appliqué sur la surface libre de ladite couche ou feuille (14) de matière de protection contre les rayonnements infrarouges.

3. Couverture isolante selon la revendication 1 ou 2, **caractérisée en ce qu'**une couche (18), constituée d'une matière de protection contre la chaleur transmise par conduction, est couplée et d'un seul tenant sur la surface libre de la couche (16), constituée d'une matière de protection contre la chaleur transmise par convexion.

4. Couverture isolante selon l'une quelconque des revendications précédentes, **caractérisée en ce qu'**elle comprend une première couche (12) formée d'une substance transparente aux rayonnements infrarouges et possédant des propriétés diélectriques, une deuxième couche (14) constituée d'une matière de protection contre les rayonnements infrarouges, une troisième couche (16), constituée d'une matière de protection contre la chaleur transmise par convexion, et une quatrième couche (18) constituée d'une matière de protection contre la chaleur transmise par conduction.

5. Couverture isolante selon l'une quelconque des revendications précédentes, **caractérisée en ce que** la couche (14), constituée d'une matière de protection contre les rayonnements infrarouges, est une feuille d'aluminium ou de papier ou de matière plastique couvert d'aluminium, d'une épaisseur comprise entre 2 et 50 µm.

6. Couverture isolante selon l'une quelconque des revendications précédentes, **caractérisée en ce que** la couche (16), constituée d'une matière de protection contre la chaleur transmise par convexion, consiste en une matière plastique expansée, d'une épaisseur comprise entre 1 et 10 mm.

7. Couverture isolante selon la revendication 6, dans laquelle la matière plastique expansée est du polypropylène expansé, non réticulé, d'une densité d'environ 40 kg/m³.

8. Couverture isolante selon l'une quelconque des revendications 3 à 7, **caractérisée en ce que** la couche (18), constituée d'une matière de protection contre la chaleur transmise par conduction, constitue un espace d'air construit sur du polypropylène, du polystyrène ou du polyuréthane, ou une grille ou un cadre de matière plastique ou d'étoffe non tissée en fibres naturelles et/ou synthétiques, d'une épaisseur comprise entre 0,5 et 10 mm.

9. Couverture isolante selon l'une quelconque des revendications précédentes, **caractérisée en ce que** l'épaisseur globale du panneau multicouche ne dépasse pas 20 mm, et est comprise de préférence entre 5 et 10 mm.

10. Couverture isolante selon l'une quelconque des revendications précédentes, **caractérisée en ce que** la hauteur du panneau est égale à celle d'une partie de l'accumulateur comprise entre le bord du couvercle supérieur et le patin inférieur, et sa longueur est égale au développement de la surface latérale dudit accumulateur, et **en ce que** des diminutions d'épaisseur ou des empreintes préalables (20) se développant verticalement forment des lignes de flexion dans ledit panneau.
